# FASCICULE DE BREVET EUROPEEN

(11) **EP 3 185 178 B1**
(45) Date de publication et mention de la délivrance du brevet: **15.05.2019**
(21) Numéro de dépôt: 16206495.0
(22) Date de dépôt: 22.12.2016
(51) Int. Cl.: G06K 9/00

(54) **PROCEDE ET DISPOSITIF D`IDENTIFICATION BIOMETRIQUE**
VERFAHREN UND ANORDNUNG ZUR BIOMETRISCHER IDENTIFIZIERUNG
METHOD AND APPARATUS FOR BIOMETRICAL IDENTIFICATION

(30) Priorité: 22.12.2015 FR 1563046; 11.03.2016 FR 1652084
(43) Date de publication de la demande: 28.06.2017
(73) Titulaire: Idemia Identity & Security France, 92400 Courbevoie (FR)
(72) Inventeur: RAGOT, Marcelin, 92400 COURBEVOIE (FR); BERTHIER, Maël, 92400 COURBEVOIE (FR); BOCKTAELS, Yves, 92400 COURBEVOIE (FR); BRINGER, Julien, 92400 COURBEVOIE (FR)
(74) Mandataire: Lavialle, Bruno François Stéphane

(56) Documents cités:
- EP-A2- 2 166 473
- WO-A1-2008/010773
- US-A1- 2009 289 761
- MARTINEZ-DIAZ M ET AL: "Hill-Climbing and Brute-Force Attacks on Biometric Systems: A Case Study in Match-on-Card Fingerprint Verification", CARNAHAN CONFERENCES SECURITY TECHNOLOGY, PROCEEDINGS 2006 40TH ANNUAL IEEE INTERNATIONAL, IEEE, PI, 1 octobre 2006 (2006-10-01), pages 151-159, XP031047888, DOI: 10.1109/CCST.2006.313444 ISBN: 978-1-4244-0174-1

## Description

La présente invention concerne la biométrie et plus particulièrement un procédé d'identification biométrique. Dans le présent document, le terme « empreinte » est utilisé pour désigner un ensemble de caractéristiques biométriques, ou minuties, d'une personne et notamment un ensemble de caractéristiques biométriques d'au moins un de ses doigts, une de ses paumes, d'une partie de son réseau veineux, d'un iris d'au moins un de ses yeux, de son visage, d'une oreille, voire les caractéristiques de sa voix... Ces ensembles de caractéristiques biométriques peuvent se présenter sous la forme de morceaux d'images vectorisées.

### ETAT DE LA TECHNIQUE

L'identification biométrique est basée sur la comparaison d'une empreinte candidate à une empreinte de référence. L'empreinte de référence est enregistrée dans une mémoire telle que celle d'une carte à circuit intégré ou d'un serveur informatique et la comparaison est effectuée par un circuit intégré (celui de la carte à circuit intégré ou l'un de ceux du serveur). L'empreinte candidate est capturée sur la personne que l'on souhaite identifier. La comparaison vise à déterminer un score de l'empreinte candidate en fonction de la proximité entre les caractéristiques de l'empreinte candidate et de l'empreinte de référence. L'identification de la personne à identifier est validée lorsque le score de l'empreinte candidate dépasse un seuil prédéterminé.

Il existe des techniques de fraude consistant à analyser la consommation électrique du circuit intégré, le temps d'exécution et le rayonnement électromagnétique produit lors d'opérations successives d'identification réalisées à partir d'une même empreinte candidate à laquelle de légères modifications ont été apportées d'une opération d'identification à l'autre (une telle technique de fraude est par exemple présentée dans le document Hill-Climbing and Brute-Force attacks on Biometric Systems: A Case Study in Match-on-Card Fingerprint Verification - M. Martinez-Diaz, J. Fierrez-Aguilar, F. Alonso-Fernandez, J. Ortega-Garcia, J.A. Siguenza - Proc. IEEE Intl. Carnahan Conf. on Security Techology, ICCST, pp. 151-159, Lexington USA - October 2006). Le but de l'analyse de l'alimentation, du temps d'exécution et du rayonnement électromagnétique du circuit intégré est de déterminer l'impact des modifications de l'empreinte candidate sur les paramètres analysés et d'en déduire l'évolution du score résultant de ces modifications. Menée à son terme, une telle analyse, si elle prend du temps, permet néanmoins d'élaborer une empreinte candidate susceptible de valider l'identification.

### OBJET DE L'INVENTION

Un but de l'invention est de fournir un moyen pour améliorer la résistance des procédés d'identification aux fraudes.

### BREF EXPOSE DE L'INVENTION

A cet effet, on prévoit, selon l'invention, un procédé de reconnaissance biométrique par comparaison d'une empreinte candidate à au moins une empreinte de référence en vue de déterminer un score en fonction d'une similarité des deux empreintes et d'un seuil prédéterminé de validation auquel le score est comparé. Le procédé comprend les étapes de :
- capturer une première empreinte candidate ;
- comparer la première empreinte candidate avec l'empreinte de référence et calculer un score de la première empreinte candidate pour l'empreinte de référence ;
- au moins lorsque le score est inférieur au seuil de validation, comparer la première empreinte candidate avec au moins une première empreinte leurre, ladite première empreinte leurre ayant été engendrée pour avoir des caractéristiques biométriques permettant à la première empreinte candidate d'avoir un score au moins égal au premier seuil prédéterminé ;
- calculer un score de la première empreinte candidate pour la première empreinte leurre.

Usuellement, l'empreinte candidate n'est comparée qu'à des empreintes de référence, c'est-à-dire des empreintes appartenant à des personnes connues ou autorisées dont l'empreinte a été enregistrée dans une mémoire du système d'identification. Ainsi, lors d'une attaque de l'algorithme d'identification, l'attaquant ne peut savoir qu'au moins une des empreintes auxquelles l'empreinte candidate est comparée est une empreinte leurre. Le premier seuil prédéterminé correspond au score qu'atteindrait une empreinte candidate présentant une relative proximité avec l'empreinte leurre. Si l'attaquant parvient à détecter les scores, il va donc identifier que l'empreinte candidate qu'il a présenté possède un score relativement intéressant avec une des empreintes de référence alors que le score en question a été calculé à partir de l'empreinte leurre. Ceci va par conséquent induire en erreur l'attaquant et compliquer l'analyse du fonctionnement de l'algorithme.

Avantageusement, le procédé comprend les étapes de :
- capturer une deuxième empreinte candidate ;
- comparer la deuxième empreinte candidate avec l'empreinte de référence et calculer un score de la deuxième empreinte candidate pour l'empreinte de référence ;
- comparer la deuxième empreinte candidate avec la première empreinte leurre et calculer un score de la deuxième empreinte candidate pour la première empreinte leurre ;
- si le score est inférieur au seuil de validation pour l'empreinte de référence ou au premier seuil prédéterminé pour la première empreinte leurre, engendrer une deuxième empreinte leurre pour avoir des caractéristiques biométriques permettant à la deuxième empreinte candidate d'avoir un score au moins égal au premier seuil prédéterminé.

Ainsi, lorsque l'attaque est menée par présentations successives d'empreintes candidates présentant entre elles des différences mineures (attaque communément appelée « hill climbing »), l'algorithme d'identification de l'invention est agencé pour pouvoir toujours comparer l'empreinte candidate à une empreinte leurre proche, que cette empreinte leurre ait été engendrée pour une empreinte candidate précédente mais proche de l'empreinte candidate actuellement traitée ou spécifiquement engendrée pour l'empreinte candidate actuellement traitée. L'attaquant peut seulement savoir que l'un des scores est favorable mais sans savoir qu'il est calculé par rapport à une empreinte leurre. L'empreinte qui sera ainsi constituée par l'attaquant ne lui permettra pas de réussir l'identification.

L'invention a également pour objet un dispositif d'identification agencé pour la mise en oeuvre de ce procédé.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence à la figure unique annexée représentant schématiquement un dispositif d'identification pour la mise en oeuvre du procédé de l'invention.

### DESCRIPTION DETAILLEE DE L'INVENTION

L'invention est ici décrite en application à une identification biométrique sur la base d'une empreinte digitale. Il va de soi que l'invention est applicable à tout type de biométrie et peut par exemple porter sur les caractéristiques d'un iris d'au moins un oeil, les caractéristiques d'un réseau veineux, les caractéristiques d'un visage ou d'une oreille, les caractéristiques de la voix...

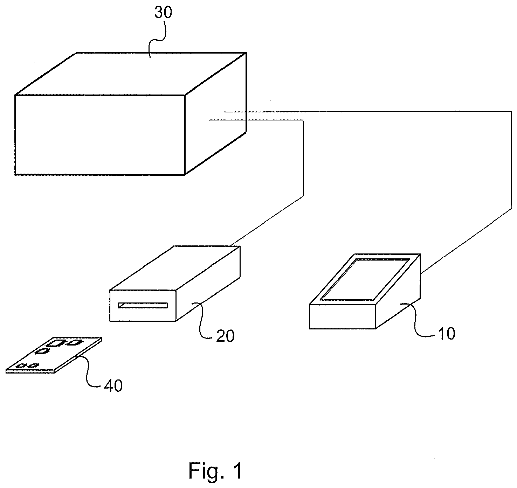

En référence à la figure 1, le procédé de l'invention est ici mis en oeuvre au moyen d'un dispositif d'identification comprenant : au moins un organe de capture d'empreinte digitale 10 ; un lecteur de carte à circuit intégré 20 ; une unité informatique 30 reliée au dispositif de capture 10 et au lecteur 20 ; et au moins une carte à circuit intégré 40. L'organe de capture d'empreinte digitale 10 comprend ici un capteur optique mais d'autres technologies sont utilisables. Le lecteur 20 est ici un lecteur de type à contact. L'unité informatique 30 comporte ici un processeur et des mémoires et est agencée pour exécuter un premier programme mettant en oeuvre le procédé de l'invention.

Le circuit intégré de la carte à circuit intégré 40 comprend un processeur et une mémoire pour exécuter un second programme mettant en oeuvre le procédé de l'invention au moyen d'un algorithme de traitement et comparaison d'empreintes (on parle de programme de « matching » dans la suite). La carte à circuit intégré 40 est remise à un utilisateur du dispositif. La mémoire de la carte contient également des caractéristiques d'une empreinte de référence constituée d'une empreinte digitale de l'utilisateur à qui la carte à circuit intégré 40 a été remise et, éventuellement, une identification de l'utilisateur, comme son nom, et des droits attachés à l'utilisateur comme le droit de pénétrer tels lieux ou d'accéder à tels fichiers, documents ou informations...

Ainsi, de manière connue en elle-même, préalablement à la mise en oeuvre du procédé d'identification est réalisée une opération d'enrôlement au cours de laquelle :
- des caractéristiques biométriques d'une empreinte de référence de l'utilisateur sont extraites d'une image capturée par l'organe de capture d'empreinte digitale 10 ;
- ces caractéristiques biométriques de l'empreinte de référence sont enregistrées dans la mémoire du circuit intégré de la carte à circuit intégré.

En outre, deux empreintes leurres L1, L2 sont générées aléatoirement et sont enregistrées respectivement dans des emplacements M1, M2 de la mémoire du circuit intégré de la carte à circuit intégré (les désignations L1, L2, M1, M2 ne sont pas utilisées comme des références numériques représentées sur les figures mais simplement pour faciliter l'identification de ces éléments dans la suite de la description, et d'autres désignations du même type seront utilisées dans la suite à cette même fin). L'empreinte de référence et les empreintes leurres sont enregistrées dans le même espace mémoire.

Le procédé d'identification biométrique selon l'invention débute par les étapes de :
- capturer des caractéristiques biométriques d'une empreinte candidate C1 sur le même doigt d'un candidat à l'identification ;
- les transmettre au circuit intégré de la carte qui met en oeuvre l'algorithme de « matching ».

Ces étapes sont réalisées par l'unité informatique 30 commandant l'organe de capture d'empreinte digitale 10 et le lecteur de carte à circuit intégré 20.

Le procédé de « matching » comprend les étapes suivantes :
- aligner les caractéristiques biométriques de l'empreinte candidate C1 de telle manière que l'empreinte candidate C1 soit orientée et centrée comme l'empreinte de référence ;
- comparer les caractéristiques biométriques de l'empreinte candidate C1 aux caractéristiques biométriques mémorisées de l'empreinte de référence ;
- calculer un score de l'empreinte candidate en fonction d'un nombre de caractéristiques biométriques communes aux deux empreintes.

La comparaison des caractéristiques biométriques des empreintes est effectuée en tentant d'apparier chaque caractéristique biométrique de l'empreinte candidate C1 avec l'une des caractéristiques biométriques de l'empreinte de référence. Le score est calculé en fonction des appariements réalisés, c'est-à-dire en fonction de la proximité des caractéristiques biométriques de l'empreinte candidate C1 avec celles de l'empreinte de référence. On notera que les opérations d'appariement et de calcul de score sont connues en elles-mêmes et ne seront pas plus détaillées ici.

Selon l'invention, le procédé comprend les étapes ultérieures de :
- comparer, de la même manière que précédemment décrit, l'empreinte candidate C1 avec chacune des empreintes leurres L1, L2 ;
- calculer un score de l'empreinte candidate C1 pour chacune des empreintes leurres L1, L2.

Si aucun des scores obtenus avec les empreintes leurres n'est supérieur à un premier seuil prédéterminé S1 inférieur à un seuil de validation SV, l'algorithme modifie l'une des empreintes aléatoires L1, L2, par exemple ici L1, de telle manière que l'empreinte candidate C1 ait un score compris entre le premier seuil prédéterminé S1 et un seuil prédéterminé S2 tous deux inférieur au seuil de validation SV. L'empreinte leurre modifiée, noté L1', est réenregistrée dans l'emplacement M1 à la place de l'empreinte leurre L1. La modification est l'ajout dans l'empreinte leurre L1 de caractéristiques biométriques de l'empreinte candidate C1.

Le seuil de validation est égal au score à partir duquel on considère que deux empreintes sont identiques. Le premier seuil prédéterminé S1 est déterminé pour correspondre à une relative proximité de l'empreinte leurre L1' avec l'empreinte candidate C1 sans que ces deux empreintes puissent être considérées comme identiques. Le deuxième seuil prédéterminé S2 est un seuil d'alerte inférieur au seuil de validation SV et dont la fonction sera explicitée plus tard.

A la fin de l'opération de validation, les scores sont tous comparés au seuil de validation SV. Alors, soit le score de l'empreinte candidate C1 avec l'empreinte de référence a atteint le seuil de validation et l'identification est validée, soit le score de l'empreinte candidate C1 avec l'empreinte de référence est inférieur au seuil de validation et l'identification est refusée.

Si ultérieurement, une deuxième tentative d'identification est effectuée, le procédé comprend les étapes de :
- capturer une deuxième empreinte candidate C2 ;
- comparer l'empreinte candidate C2 avec l'empreinte de référence et calculer un score de l'empreinte candidate C2 pour l'empreinte de référence ;
- comparer l'empreinte candidate C2 avec les empreintes leurres L1', L2 et calculer un score de l'empreinte candidate avec chacune des empreintes leurres.

Si l'empreinte candidate C2 est une empreinte candidate élaborée par un fraudeur à partir de l'empreinte candidate C1 pour tenter d'attaquer l'algorithme d'identification, l'empreinte candidate C2 ne va comporter que quelques différences par rapport à l'empreinte candidate C1 et sera donc proche de l'empreinte candidate C1. Le score de l'empreinte C2 sera donc vraisemblablement compris entre les seuils prédéterminés S1 et S2 pour l'empreinte leurre L1', et il n'est pas recréé ou modifié une empreinte leurre.

L'algorithme se poursuit alors en comparant tous les scores obtenus au seuil de validation SV pour valider ou refuser l'identification.

Si le score de l'empreinte C2 atteint le deuxième seuil prédéterminé S2 pour l'empreinte leurre L1', le procédé mis en oeuvre par l'algorithme comprend l'étape de déclencher une action de sécurisation. L'action de sécurisation comprend l'étape de modifier l'empreinte leurre L1' pour laquelle l'empreinte candidate C2 a un score supérieur au deuxième seuil prédéterminé S2 de manière à former une empreinte leurre L1" pour laquelle le score de l'empreinte candidate C2 sera compris entre les seuils prédéterminés S1 et S2. Si un score doit être retourné par l'algorithme, alors le score issu de la comparaison de C1 avec L1' est retourné.

L'algorithme se poursuit alors en comparant tous les scores obtenus au seuil de validation SV pour valider ou refuser l'identification.

Si au contraire, l'empreinte candidate C2 n'a rien à voir avec l'empreinte candidate C1, le score de l'empreinte candidate C2 est très probablement inférieur au premier seuil prédéterminé pour les deux empreintes leurres L1', L2, le procédé comprend les étapes de
- modifier l'empreinte leurre la plus ancienne, ici l'empreinte leurre L2, pour engendrer une empreinte leurre L2' ayant des caractéristiques biométriques permettant à l'empreinte candidate C2 d'avoir un score compris entre les seuils prédéterminés S1 et S2 ;
- d'enregistrer l'empreinte leurre L2' dans l'emplacement de mémoire M2 à la place de l'empreinte leurre L2 ;
- calculer un score de l'empreinte candidate C2 pour l'empreinte leurre L2'.

L'algorithme se poursuit alors en comparant tous les scores obtenus au seuil de validation SV pour valider ou refuser l'identification.

Il est procédé de cette façon pour chaque tentative ultérieure d'identification :
- si la nouvelle empreinte candidate a un score supérieur au premier seuil pour l'une des empreintes leurres, aucune empreinte leurre n'est modifiée,
- si la nouvelle empreinte candidate a un score inférieur au premier seuil pour les deux empreintes leurres, l'empreinte leurre la plus ancienne est modifiée et écrasée.

On note que le fait de disposer de deux empreintes leurres permet à l'algorithme d'identification de supporter deux attaques parallèles par présentations successives d'empreintes candidates proches (les empreintes des deux attaques sont présentées en alternance).

Pour s'assurer que le temps d'exécution de l'algorithme apparaisse le plus constant possible quelle que soit l'empreinte candidate, on peut prévoir après la modification de l'empreinte leurre de refaire une comparaison et un calcul de score de l'empreinte candidate avec l'une des empreintes mémorisées ou avec l'empreinte de référence et les deux empreintes leurres.

Dans ce même but, on peut prévoir de créer une empreinte leurre fictive quand l'empreinte candidate a un score supérieur au seuil de validation pour l'empreinte de référence ou supérieur au premier seuil prédéterminé pour une des empreintes leurres. L'empreinte candidate est alors comparée à l'empreinte leurre fictive et un score est calculé pour cette empreinte leurre fictive. Il n'est pas nécessaire d'enregistrer l'empreinte leurre fictive dans la mémoire. Toutefois, pour conserver une durée d'identification constante, il est préférable de simuler une inscription de l'empreinte leurre fictive en mémoire ou de réellement enregistrer l'empreinte leurre fictive par exemple à la place d'une empreinte leurre non utilisée.

Bien entendu, l'invention n'est pas limitée aux modes de réalisation décrits mais englobe toute variante entrant dans le champ de l'invention telle que définie par les revendications.

En particulier, il est possible d'utiliser une ou plus de deux empreintes leurres selon la taille de la mémoire utilisée pour contenir les empreintes leurres.

Il est envisageable de ne pas écraser l'empreinte leurre la plus ancienne mais d'inscrire la nouvelle empreinte leurre dans un emplacement de mémoire libre tant qu'existe un tel emplacement. On prévoit alors une taille maximale allouée à l'enregistrement des empreintes leurres. Il faut cependant veiller à limiter ou compenser l'augmentation de la durée d'identification résultant de l'accroissement du nombre d'empreintes leurres.

Les empreintes leurres enregistrées initialement peuvent être identiques ou différentes.

La mémoire peut contenir plusieurs empreintes de référence.

Les empreintes leurres peuvent être enregistrées dans un espace mémoire différent de celui dans lequel est enregistrée l'empreinte de référence de manière à facilement distinguer celles-ci.

Les empreintes leurres peuvent être associées à un identifiant permettant de les distinguer des empreintes de référence.

Les empreintes leurres peuvent être des empreintes complètes ou des parties d'empreintes.

Les seuils utilisés peuvent être identiques ou non pour les empreintes leurres.

L'action de sécurisation peut être différente de celle décrite et par exemple comprendre l'étape d'interrompre l'identification ou de demander la saisie d'un code par un opérateur, ou plus généralement au choix de l'intégrateur du système (par exemple, sur carte à circuit imprimé, prendre la décision de désactiver la carte).

L'empreinte leurre peut être engendrée pour avoir des caractéristiques biométriques permettant à l'empreinte candidate d'avoir un score seulement supérieur au premier seuil, ou bien compris entre le premier seuil prédéterminé et le seuil de validation.

En variante, l'usage d'un deuxième seuil prédéterminé est facultatif. L'action de sécurisation peut être déclenchée après comptage d'un nombre de comparaisons entre une empreinte candidate et une même empreinte leurre et comparaison du nombre de comparaisons et d'un troisième seuil prédéterminé.

Dans une variante moins sécurisée, il est possible de ne comparer au seuil de validation que le score obtenu avec l'empreinte de référence.

Dans une autre variante moins sécurisée, on peut prévoir pour ne pas faire perdre de temps aux candidats autorisés de n'utiliser les empreintes leurres que quand le score de l'empreinte candidate est inférieur au seuil de validation pour l'empreinte de référence. On tablera sur le fait que le fraudeur ne dispose pas d'une empreinte candidate autorisée et ne s'apercevra donc pas de la différence de durée dans le traitement de l'empreinte.

S'il est possible de réduire les émissions de parasites lors de la mise en oeuvre du procédé de l'invention (symétrisation de certaines opérations, conservation d'un temps d'exécution constant d'une phase quel que soit le nombre d'opérations réalisées durant cette phase, introduction de composantes aléatoires dans l'exécution du procédé...), on le fera uniquement (car on souhaite garder une faille plus ou moins cachée pour la comparaison des leurres) lors des étapes de comparaison de l'empreinte candidate avec l'empreinte de référence et du calcul du score correspondant.

On notera qu'il est possible de modifier, d'une empreinte candidate à l'autre, l'ordre de comparaison de l'empreinte candidate avec les empreintes de référence et les empreintes leurres.

Les caractéristiques biométriques peuvent être fournies directement par un organe de lecture ou capture biométrique ou être transférées par exemple depuis une base de données ou capturées.

Différents procédés de matching peuvent être utilisés et par exemple celui utilisant dénommé MCC (pour « Minutia Cylinder Code ») ou celui décrit dans les publications suivantes :
- IEEE Transactions on Pattern Analysis and Machine Intelligence (Volume 28, Issue: 12), pages 2037 - 2041, Décembre 2006, ISSN 0162-8828, 10.1109/TPAMI.2006.244 ;
- IEEE Transactions on Pattern Analysis and Machine Intelligence (Volume 32, Issue: 12) Biometrics Compendium, IEEE, pages 2128 - 2141, &8 mars 2010, ISSN 0&62-8828, DOI 10.1109/TPAMI.2010.52.

Le terme « empreinte » est employé dans le présent document comme désignant un ensemble de caractéristiques biométriques d'une personne de sorte que l'invention n'est aucunement limitée à une application aux empreintes digitales.

L'invention est applicable à des systèmes fixes comportant un serveur et des terminaux de capture d'empreinte, ou à des systèmes embarqués sur des terminaux mobiles de télécommunications tels que des ordinateurs portables ou des téléphones cellulaires de type smartphone par exemple. Le serveur et/ou les terminaux de capture, ou les systèmes embarqués comprennent une unité électronique agencée pour mettre en oeuvre le procédé de l'invention.

Le procédé peut avantageusement comprendre une étape de configuration dans laquelle une action de sécurisation est sélectionnée dans une liste d'actions de sécurisation prédéterminées.

Le procédé peut avantageusement comprendre une étape de configuration dans laquelle au moins une empreinte leurre est préenregistrée, l'empreinte leurre étant une empreinte aléatoire.

Une empreinte leurre est une empreinte (ou plus précisément un gabarit d'empreinte - « template » en anglais) comprenant des minuties ou des points caractéristiques qui sont améliorées de façon itérative par présentations successives à l'algorithme de comparaison contre une empreinte cible de manière à conserver au cours des itérations un lot croissant de caractéristiques biométriques prédéterminées sélectionnées en fonction d'un score de comparaison supérieur au score obtenu lors de l'itération précédente. L'empreinte leurre préenregistrée peut être une empreinte authentique non autorisée, une empreinte dont les minuties ont été engendrées de manière aléatoire ou dont les minuties ont été sélectionnées et sont en nombre suffisant pour, par exemple, regrouper les minuties les plus fréquentes ou au contraire les moins fréquentes. Les modifications réalisées peuvent comprendre la modification du type de minutie, l'ajout de minuties, le retrait de minuties, le déplacement de minuties...

En variante, même si le score de la première empreinte candidate est au moins égal au seuil de validation pour l'empreinte de référence, la première empreinte candidate est comparée avec la première empreinte leurre et un score de la première empreinte candidate est calculée pour la première empreinte leurre.

En variante également, l'empreinte leurre engendrée a été engendrée et a été enregistrée à la place d'une empreinte leurre existante après comparaison de l'empreinte candidate avec l'empreinte de référence et l'empreinte leurre existante, le score obtenu avec l'empreinte de référence étant inférieur au seuil de validation et le score obtenu avec l'empreinte leurre existante étant inférieur au premier seuil prédéterminé.

## Revendications

1. Procédé de reconnaissance biométrique par comparaison d'une empreinte candidate à au moins une empreinte de référence en vue de déterminer un score en fonction d'une similarité des deux empreintes et d'un seuil prédéterminé de validation auquel le score sera comparé, **caractérisé en ce que** le procédé comprend les étapes de :
- capturer une première empreinte candidate ;
- comparer la première empreinte candidate avec l'empreinte de référence et calculer un score de la première empreinte candidate pour l'empreinte de référence ;
- au moins lorsque le score est inférieur au seuil de validation, comparer la première empreinte candidate avec au moins une première empreinte leurre, ladite première empreinte leurre ayant été engendrée pour avoir des caractéristiques permettant à la première empreinte candidate d'avoir un score au moins égal à un premier seuil prédéterminé ;
- calculer un score de la première empreinte candidate pour la première empreinte leurre.

2. Procédé selon la revendication 1, comprenant les étapes de :
- capturer une deuxième empreinte candidate ;
- comparer la deuxième empreinte candidate avec l'empreinte de référence et calculer un score de la deuxième empreinte candidate pour l'empreinte de référence ;
- comparer la deuxième empreinte candidate avec la première empreinte leurre et calculer un score de la deuxième empreinte candidate pour la première empreinte leurre ;
- si le score est inférieur au seuil de validation pour l'empreinte de référence et au premier seuil prédéterminé pour la première empreinte leurre, engendrer une deuxième empreinte leurre pour avoir des caractéristiques permettant à la deuxième empreinte candidate d'avoir un score au moins égal au premier seuil prédéterminé.

3. Procédé selon la revendication 2, comprenant l'étape de calculer un score de la deuxième empreinte candidate pour la deuxième empreinte leurre.

4. Procédé selon la revendication 1 ou 2 ou 3, dans lequel, lorsque l'empreinte candidate a un score supérieur au premier seuil avec l'empreinte leurre, le procédé comprend l'étape de déclencher une action de sécurisation lorsque le score est également supérieur à un deuxième seuil prédéterminé supérieur au premier seuil prédéterminé.

5. Procédé selon la revendication 3 ou 4, dans lequel le deuxième seuil prédéterminé est compris entre le premier seuil prédéterminé et le seuil de validation.

6. Procédé selon la revendication 4 ou la revendication 5 en dépendance de la revendication 4, dans lequel l'action de sécurisation comprend l'étape de modifier l'empreinte leurre pour laquelle l'empreinte candidate a un score supérieur au deuxième seuil prédéterminé.

7. Procédé selon la revendication 4 ou la revendication 5 en dépendance de la revendication 4 ou la revendication 6, dans lequel l'action de sécurisation comprend l'étape d'interrompre l'identification.

8. Procédé selon l'une au moins des revendications 4 à 7, comprenant une étape de configuration dans laquelle une action de sécurisation est sélectionnée dans une liste d'actions de sécurisation prédéterminées.

9. Procédé selon la revendication 2 ou 3, dans lequel l'empreinte leurre engendrée a été engendrée et a été enregistrée à la place d'une empreinte leurre existante après comparaison de l'empreinte candidate avec l'empreinte de référence et l'empreinte leurre existante, le score obtenu avec l'empreinte de référence étant inférieur au seuil de validation et le score obtenu avec l'empreinte leurre existante étant inférieur au premier seuil prédéterminé.

10. Procédé selon la revendication 9, comprenant une étape de configuration dans laquelle au moins une empreinte leurre est préenregistrée, l'empreinte leurre étant une empreinte aléatoire.

11. Procédé selon la revendication 1, dans lequel même si le score de la première empreinte candidate est au moins égal au seuil de validation pour l'empreinte de référence, la première empreinte candidate est comparée avec la première empreinte leurre et un score de la première empreinte candidate est calculée pour la première empreinte leurre.

12. Procédé selon l'une quelconque des revendications précédentes, comprenant les étapes de :
- créer une empreinte leurre fictive quand l'empreinte candidate a un score supérieur au seuil de validation pour l'empreinte de référence ou supérieur au premier seuil prédéterminé pour l'une des empreintes leurres ;
- comparer l'empreinte candidate à l'empreinte leurre fictive ;
- calculer un score pour cette empreinte leurre fictive.

13. Procédé selon la revendication 12, comprenant l'étape d'enregistrer l'empreinte leurre fictive dans la mémoire.

14. Procédé selon la revendication 12, comprenant l'étape de simuler une inscription de l'empreinte leurre fictive en mémoire.

15. Procédé selon l'une quelconque des revendications précédentes, dans lequel l'empreinte leurre a été engendrée pour avoir des caractéristiques permettant à l'empreinte candidate d'avoir un score compris entre le premier seuil prédéterminé et le seuil de validation.

16. Dispositif d'identification biométrique comprenant au moins un organe de capture d'empreinte digitale (10) et une unité informatique (30) reliée au dispositif de capture, l'unité informatique étant agencée pour mettre en oeuvre du procédé selon l'une quelconque des revendications précédentes.

## Patentansprüche

1. Verfahren zur biometrischen Wiedererkennung mittels Vergleichs eines Kandidatenabdrucks mit mindestens einem Referenzabdruck zwecks Bestimmung eines Vergleichswerts in Abhängigkeit einer Ähnlichkeit der beiden Abdrücke und eines vorgegebenen Validierungsschwellwerts, mit dem der Vergleichswert verglichen wird, **dadurch gekennzeichnet, dass** das Verfahren die Schritte umfasst:
- Erfassen eines ersten Kandidatenabdrucks;
- Vergleichen des ersten Kandidatenabdrucks mit dem Referenzabdruck und Berechnen eines Vergleichswerts des ersten Kandidatenabdrucks für den Referenzabdruck;
- zumindest wenn der Vergleichswert kleiner als der Validierungsschwellwert ist, Vergleichen des ersten Kandidatenabdrucks mit mindestens einem ersten Täuschungsabdruck, wobei der genannte erste Täuschungsabdruck erzeugt wurde, um Eigenschaften zu haben, die es dem ersten Kandidatenabdruck ermöglichen, einen Vergleichswert zu haben, der mindestens gleich einem vorgegebenen ersten Schwellwert ist;
- Berechnen eines Vergleichswerts des ersten Kandidatenabdrucks für den ersten Täuschungsabdruck.

2. Verfahren nach Anspruch 1, umfassend die Schritte:
- Erfassen eines zweiten Kandidatenabdrucks;
- Vergleichen des zweiten Kandidatenabdrucks mit dem Referenzabdruck und Berechnen eines Vergleichswerts des zweiten Kandidatenabdrucks für den Referenzabdruck;
- Vergleichen des zweiten Kandidatenabdrucks mit dem ersten Täuschungsabdruck und Berechnen eines Vergleichswerts des zweiten Kandidatenabdrucks für den ersten Täuschungsabdruck;
- wenn der Vergleichswert kleiner als der Validierungsschwellwert für den Referenzabdruck und kleiner als der vorgegebene erste Schwellwert für den ersten Täuschungsabdruck ist, Erzeugen eines zweiten Täuschungsabdrucks, um Eigenschaften zu haben, die es dem zweiten Kandidatenabdruck ermöglichen, einen Vergleichswert zu haben, der mindestens gleich dem vorgegebenen ersten Schwellwert ist.

3. Verfahren nach Anspruch 2, umfassend den Schritt des Berechnens eines Vergleichswerts des zweiten Kandidatenabdrucks für den zweiten Täuschungsabdruck.

4. Verfahren nach Anspruch 1 oder 2 oder 3, bei dem, wenn der Kandidatenabdruck einen Vergleichswert mit dem Täuschungsabdruck hat, der über dem ersten Schwellwert liegt, das Verfahren den Schritt des Auslösens einer Schutzmaßnahme umfasst, wenn der Vergleichswert ebenfalls über dem vorgegebenen zweiten Schwellwert liegt, der größer als der vorgegebene erste Schwellwert ist.

5. Verfahren nach Anspruch 3 oder 4, bei dem der vorgegebene zweite Schwellwert zwischen dem vorgegebenen ersten Schwellwert und dem Validierungsschwellwert liegt.

6. Verfahren nach Anspruch 4 oder Anspruch 5 in Abhängigkeit von Anspruch 4, bei dem die Schutzmaßnahme den Schritt des Modifizierens des Täuschungsabdrucks umfasst, für den der Kandidatenabdruck einen Vergleichswert hat, der über dem vorgegebenen zweiten Schwellwert liegt.

7. Verfahren nach Anspruch 4 oder Anspruch 5 in Abhängigkeit von Anspruch 4 oder nach Anspruch 6, bei dem die Schutzmaßnahme den Schritt des Unterbrechens der Identifizierung umfasst.

8. Verfahren nach mindestens einem der Ansprüche 4 bis 7, umfassend einen Konfigurationsschritt, bei dem eine Schutzmaßnahme aus einer Liste von vorgegebenen Schutzmaßnahmen ausgewählt wird.

9. Verfahren nach Anspruch 2 oder 3, bei dem der erzeugte Täuschungsabdruck anstelle eines vorhandenen Täuschungsabdrucks nach dem Vergleich des Kandidatenabdrucks mit dem Referenzabdruck und dem vorhandenen Täuschungsabdruck erzeugt und gespeichert wurde, wobei der mit dem Referenzabdruck erhaltene Vergleichswert kleiner als der Validierungsschwellwert ist und der mit dem vorhandenen Täuschungsabdruck erhaltene Vergleichswert kleiner als der vorgegebene erste Schwellwert ist.

10. Verfahren nach Anspruch 9, umfassend einen Konfigurationsschritt, bei dem mindestens ein Täuschungsabdruck vorab gespeichert ist, wobei der Täuschungsabdruck ein Zufallsabdruck ist.

11. Verfahren nach Anspruch 1, bei dem, selbst wenn der Vergleichswert des ersten Kandidatenabdrucks mindestens gleich dem Validierungsschwellwert für den Referenzabdruck ist, der erste Kandidatenabdruck mit dem ersten Täuschungsabdruck verglichen wird und ein Vergleichswert des ersten Kandidatenabdrucks für den ersten Täuschungsabdruck berechnet wird.

12. Verfahren nach einem der vorhergehenden Ansprüche, umfassend die Schritte:
- Erzeugen eines fiktiven Täuschungsabdrucks, wenn der Kandidatenabdruck einen Vergleichswert für den Referenzabdruck hat, der über dem Validierungsschwellwert liegt oder einen Vergleichswert für einen der Täuschungsabdrücke hat, der über dem vorgegebenen ersten Schwellwert liegt;
- Vergleichen des Kandidatenabdrucks mit dem fiktiven Täuschungsabdruck;
- Berechnen eines Vergleichswerts für diesen fiktiven Täuschungsabdruck.

13. Verfahren nach Anspruch 12, umfassend den Schritt des Abspeicherns des fiktiven Täuschungsabdrucks in dem Speicher.

14. Verfahren nach Anspruch 12, umfassend den Schritt des Simulierens eines Einschreibens des fiktiven Täuschungsabdruckes in den Speicher.

15. Verfahren nach einem der vorhergehenden Ansprüche, bei dem der Täuschungsabdruck erzeugt worden ist, um Eigenschaften zu haben, die es dem Kandidatenabdruck ermöglichen, einen Vergleichswert zu haben, der zwischen dem vorgegebenen ersten Schwellwert und dem Validierungsschwellwert liegt.

16. Vorrichtung zur biometrischen Identifizierung, umfassend mindestens ein Element zur Erfassung eines Fingerabdrucks (10) und eine Rechnereinheit (30), die mit der Erfassungsvorrichtung verbunden ist, wobei die Rechnereinheit ausgebildet ist, um das Verfahren nach einem der vorhergehenden Ansprüche durchzuführen.

## Claims

1. A method for biometric recognition by comparing a candidate print with at least one reference print for determining a score depending on the similarity of the two prints and a predetermined validation threshold which the score will be compared with, **characterized in that** the method comprises the following steps:
- capturing a first candidate print;
- comparing the first candidate print with the reference print and computing a score of the first candidate print for the reference print;
- at least when the score is under the validation threshold, comparing the first candidate print with at least one first deceiving print, with said first deceiving print having been created for having characteristics enabling the first candidate print to obtain a score at least equal to a first predetermined threshold;
- computing a score of the first candidate print for the first deceiving print.

2. A method according to the preceding claim, which comprises the following steps:
- capturing a second candidate print;
- comparing the second candidate print with the reference print and computing a score of the second candidate print for the reference print;
- comparing the second candidate print with the first deceiving print and computing a score of the second candidate print for the first deceiving print;
- if the score is under the validation threshold for the reference print and under the first predetermined threshold for the first deceiving print, generating a second deceiving print to have characteristics enabling the second candidate print to obtain a score at least equal to the first predetermined threshold.

3. A method according to claim 2, comprising the step of computing a score of the second candidate print for the second deceiving print.

4. A method according to claim 1 or 2 or 3, wherein, when the candidate print obtains a score above the first threshold with the deceiving print, the method comprises the step of triggering a securing action when the score is also above a second predetermined threshold above the first predetermined threshold.

5. A method according to claim 3 or 4, wherein the second predetermined threshold is between the first predetermined threshold and the validation threshold.

6. A method according to claim 4 or claim 5, when depending on claim 4, wherein the securing action comprises the step of modifying the deceiving print for which the candidate print has a score above the second predetermined threshold.

7. A method according to claim 4 or to claim 5, when depending on claim 4 or claim 6, wherein the securing action comprises the step of aborting the identification.

8. A method according to at least one of claims 4 to 7, comprising a step of configuring, during which a securing action is selected from a list of predetermined securing actions.

9. A method according to claim 2 or 3, wherein the generated deceiving print has been generated and has been saved in place of the existing deceiving print after the candidate print has been compared with the reference print and with the existing deceiving print, with the score obtained with the reference print being under the validation threshold and the score obtained with the existing deceiving print being under the first predetermined threshold.

10. A method according to claim 9, comprising a step of configuring during which at least one deceiving print is saved beforehand, with the deceiving print being a random print.

11. A method according to claim 1, wherein the first candidate print is compared with the first deceiving print and a score of the first candidate print is computed for the first deceiving print, even though the score of the first candidate print is at least equal to the validation threshold for the reference print.

12. A method according to any one of the preceding claims, comprising the steps of:
- creating a dummy deceiving print when the candidate print obtains a score above the validation threshold for the reference print or above the first predetermined threshold for one of the deceiving prints;
- comparing the candidate print with the dummy deceiving print;
- computing a score for this dummy deceiving print.

13. A method according to claim 12, comprising the step of saving the dummy deceiving print into the memory.

14. A method according to claim 12, comprising the step of simulating the writing of the dummy deceiving print into the memory.

15. A method according to any one of the preceding claims, wherein the deceiving print has been generated to have characteristics enabling the candidate print to obtain a score between the first predetermined threshold and the validation threshold.

16. A device for biometric identification comprising at least one print capture device (10) and a computer unit (30) connected to the capture device, with the computer unit being so designed as to implement the method according to any one of the preceding claims.
